Europäisches Patentamt

European Patent Office

Office européen des brevets

(19)

(11) **EP 0 457 554 B1**

(12)

# EUROPEAN PATENT SPECIFICATION

(45) Date of publication and mention
of the grant of the patent:
**28.01.1998 Bulletin 1998/05**

(51) Int Cl.6: **C08L 23/22**, F16F 7/00

(21) Application number: **91304330.3**

(22) Date of filing: **15.05.1991**

(54) **Rubber composition having a large damping capacity**

Hochdämpfende Gummizusammensetzung

Composition de caoutchouc à amortissement élevé

(84) Designated Contracting States:
**DE FR GB IT**

(30) Priority: **15.05.1990 JP 124666/90**

(43) Date of publication of application:
**21.11.1991 Bulletin 1991/47**

(73) Proprietor: **SUMITOMO RUBBER INDUSTRIES,
LTD.
Hyogo-ken (JP)**

(72) Inventors:
• **Sekido, Fumio
Akashi-shi, Hyogo-ken (JP)**

• **Terakawa, Katsumi
Akashi-shi, Hyogo-ken (JP)**

(74) Representative: **Allard, Susan Joyce et al
BOULT WADE TENNANT,
27 Furnival Street
London EC4A 1PQ (GB)**

(56) References cited:
**EP-A- 0 049 175**

• **DATABASE WPIL Section Ch, Week 8237,
Derwent Publications Ltd., London, GB; Class
A12, AN 82-78159E**

## Description

The present invention relates to a rubber composition having a large damping capacity.

Recently, laminated vibrationproofing structures have been widely used as vibration isolators for constructive structures (e.g. buildings). The laminated vibrationproofing structures are introduced between the structures and the foundation to decrease transmission of earthquake vibration energy to the structures. A wide variety of shapes for these laminated vibrationproofing structures have been proposed. Rubber compositions having a large damping capacity have been used as components of these laminated vibration proofing structures.

In order to enhance damping capacity, the rubber composition contains carbon black in a large amount. Processing characteristics and excellent elongation are also imparted by addition of a large amount of softening agent to the rubber composition. Although these conventional rubber compositions have good damping capacity, a rubber composition having a constant damping capacity in a wide range of temperature (e.g., -10 to +30 °C) and excellent aging resistance is desired.

EP-A-0049175 discloses an elastomeric article prepared from a elastomeric composition comprising a dispersion of a cross-linked elastomer, a substantially internally uncrosslinked, substantially linear polymer consisting essentially of isobutylene, a particulate material and a curative agent wherein the uncrosslinked polymer is present in an amount less than the crosslinkable rubber component.

An object of the present invention is to provide a rubber composition which can preferably be used for components requiring a high damping capacity such as rubber dampers for use in structures, public works, vehicles, oversize powered machines, and heavy weight structures; and general purpose dampers for use in sound products, a variety of meters, components of vehicles, and the like in cases of a little amount of use. The rubber composition of the present invention, accordingly, has a large damping capacity, a decreased variation of elastic modulus and damping capacity at a wide temperature range (e.g., It does not crystallize at low temperature.), and an excellent aging resistance. Thus, the present invention provides a rubber composition having a complex shear elastic modulus (Hereinafter, the complex shear elastic modulus is referred to as G*.) of $9.81 \times 10^4$-$19.61 \times 10^5$ Pa (1-20 kg/cm$^2$) and a Tan$\delta$ of 0.40-1.5 at 30°C under a frequency of 0.5 Hz ± 50 % comprising:

a) x parts by weight of a filler for use in rubber;
b) y parts by weight of carbon black having an iodine adsorption of 20-120 mg/g; and
c) 100 parts by weight of unvulcanized polyisobutylene;

wherein the value x and y satisfy the relation that:
x $\leqq$ 450, y $\leqq$ 150, and
x + y $\geqq$ 100,
wherein the polyisobutylene has a molecular weight not less than 300,000 and wherein the total rubber component, consists of polyisobutylene.

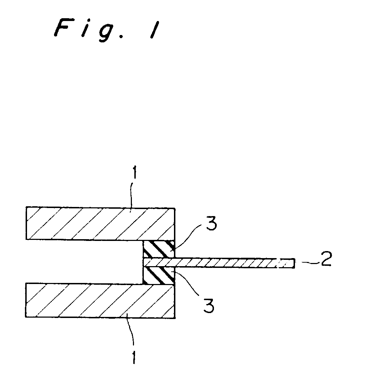

Fig. 1 is a sectional view of a sample which is prepared for measurement of G* and Tan$\delta$ of the rubber composition of the present invention.

The rubber component used in the present invention is polyisobutylene.

The polyisobutylene employed in the present invention has a molecular weight of not less than 300,000, preferably not less than 1,000,000 as obtained from Flory equation for melt viscosity. In the present invention, the wording "molecular weight" means "the Flory viscosity average molecular weight". If the molecular weight is less than 300,000, the damping capacity of the resulting rubber composition may be lessened due to the difficulty of mixing the large amount of carbon black and fillers in the composition. The carbon black employed in the present invention has an iodine adsorption of 20-120 mg/g as measured by a method described in JIS K6221. If the iodine adsorption is less than 20 mg/g, the damping capacity of the resulting rubber composition may be lessened. If the iodine adsorption is greater than 120 mg/g, dispersion during the kneading process, and processing characteristics in the successive processes (e.g. extrusion, calendering) may be lessened.

The fillers employed in the present invention may be conventional fillers for use in rubber composition in the art. Examples of suitable fillers include finely powdered talc, hard clay, surface treated calcium carbonate, calcium silicate, silica, and chinese white.

The amount of carbon black incorporated in the rubber composition of the present invention is not more than 150 parts by weight based on the 100 parts by weight of polyisobutylene. The amount of the fillers incorporated in the rubber composition of the present invention is not more than 450 parts by weight based on the 100 parts by weight of polyisobutylene. Furthermore, the combined amount of the carbon black and the fillers must be not less than 100 parts by weight. If the combined amount of the carbon black and the fillers is less than 100 parts by weight, the damping capacity of the resulting rubber composition may be lessened. If greater than 150 parts by weight of the carbon black or greater than 450 parts by weight of the filler is blended, the processing characteristics of the resulting rubber composition may be lessened.

Other conventional additives such as softening agent, tackifier, oligomer, anti-aging agent, and processing aid may optionally be incorporated in the rubber composition of the present invention. Preferably, these additives are incorporated in the rubber composition of the present invention in an amount of not more than 120 parts by weight based on 100 parts by weight of the rubber components.

Since polyisobutylene has little double bonds in its main chain, it is unvulcanized.

The rubber composition of the present invention must have a $G^*$ of $9.81 \times 10^4$-$19.61 \times 10^5$ Pa (1-20 kg/cm$^2$) and a Tan$\delta$ of 0.40-1.5 at 30°C under a frequency of 0.5 Hz $\pm$ 50 %. Tan$\delta$ is a physical property which represents damping capacity of the material. $G^*$ of the rubberlike viscoelastic material employed in the present invention is $9.81 \times 10^4$-$19.61 \times 10^5$ Pa (1-20 kg/cm$^2$), preferably $2.94 \times 10^5$-$11.77 \times 10^5$ Pa (3-12 kg/cm$^2$). The material having $G^*$ less than $9.81 \times 10^4$ Pa (1 kg/cm$^2$) is inferior in damping capacity. Since the spring constant in the shear direction of the laminated rubber structures is defined by $G^*$ and the height in vertical direction of the laminated rubber structures, if $G^*$ is greater than $19.61 \times 10^5$ Pa (20 kg/cm$^2$), the height of the laminated rubber structures becomes large to produce buckling without difficulty. Thus, a material having $G^*$ of not more than $19.61 \times 10^5$ Pa (20 kg/cm$^2$) is used.

The procedure for measurement of $G^*$ and Tan$\delta$ of the present invention is as follows. First, in the rubber composition 3 which is held between metal plates 1, 1, another metal plate 2 is introduced as shown in Fig. 1. The metal plates 1, 1 are then fixed, the metal plate 2 is moved horizontal direction at a frequency of 0.5 Hz to obtain the value of $G^*$ and Tan$\delta$.

The shear deformation is defined as the following formula:

$$\text{Shear deformation (\%)} = l_1/t_0 \times 100.$$

$l_1$:    Horizontal distance in which the metal plate 2 was moved.

$t_0$:    Thickness of the rubber composition 3.

EXAMPLES

The following examples further illustrate the present invention.

Examples 1-4 and Comparative Examples 1-5

Rubber compositions were prepared according to the formulation included in the following Table 1.

The physical properties of the resulting rubber compositions are reported in Table 2. As the physical properties, $G^*$ and Tan$\delta$ both at 30 °C and at -10 °C, $G^*$ at -10 °C where the rubber sample had been aged for 16 hours at -10 °C, as well as a rate of change of the Mooney viscosity before and after an aging for 168 hours at 100 °C were measured.

Example 1 and Comparative Examples 1 and 2 show that the polyisobutylene rubber composition of the present invention has a decreased change of $G^*$ in the range of temperature between 30 °C and -10 °C. This indicates that the rubber composition of the present invention does not crystallize under the abovenoted conditions. Apparent from Comparative Examples 3 and 5, damping capacity is reduced when the amounts of the carbon black and the fillers are decreased. Comparative Example 4 shows that the rubber composition containing too much carbon black and the fillers has reduced processing characteristics such as kneading, carbon dispersion, and calendering. Furthermore, the rubber composition of the present invention exhibits a decreased change of the Mooney viscosity before and after aging for 168 hours at 100 °C. This indicates that the rubber composition of the present invention has an excellent aging resistance.

Table 1

| Components | | | | | | | | | |
|---|---|---|---|---|---|---|---|---|---|
|  | E[a])1 | C[b])1 | C2 | E2 | E3 | E4 | C3 | C4 | C5 |
| PIB[1]) | 100 | - | - | 100 | 100 | 100 | 100 | 100 | 100 |
| NR[2]) | - | 100 | - | - | - | - | - | - | - |

a) Example

b) Comparative Example

1) Polyisobutylene

2) Natural rubber

Table 1   (continued)

| Components | E[a])1 | C[b])1 | C2 | E2 | E3 | E4 | C3 | C4 | C5 |
|---|---|---|---|---|---|---|---|---|---|
| SBR[3]) | - | - | 100 | - | - | - | - | - | - |
| CB26[4]) | 70 | 70 | 70 | - | - | - | - | 180 | - |
| CB110[5]) | - | - | - | 70 | 50 | 120 | 30 | - | 60 |
| PT[6]) | 85 | 85 | 85 | 85 | 405 | 215 | 40 | 200 | 20 |
| SA[7]) | 22 | 22 | 22 | 29 | 58 | 56 | 18 | 65 | 20 |
| StA[8]) | 2 | 2 | 2 | 2 | 2 | 2 | 2 | 2 | 2 |
| TiC[9]) | 1.2 | 1.2 | 1.2 | 1.2 | 6 | 3 | 0.7 | 3 | - |

a) Example

b) Comparative Example

3) Styrene-butadiene rubber

4) Carbon black having an iodine adsorption of 26 mg/g

5) Carbon black (LS-ISAF) having an iodine adsorption of 110 mg/g

6) Powdered talc ("Mistron Vapor", Sierra Talc co., average particle size 3 $\mu$m, maximum particle size 6 $\mu$m)

7) Softening agent

8) Stearic acid

9) Titanium coupler

Table 2

| Physical Properties | E[a])1 | C[b])1 | C2 | E2 | E3 | E4 | C3 | C4 | C5 |
|---|---|---|---|---|---|---|---|---|---|
| G*30[1]) | 3.92(4) | 4.12(4.2) | 4.90(5) | 3.73(3.8) | 6.57(6.7) | 7.06 (7.2) | 2.06(2.1) | - | 2.84(2.9) |
| G*-10[2]) | 14.42 (14.7) | 15.69 (16.0) | 24.52 (25) | 13.34 (13.6) | 22.95 (23.4) | 27.46 (28) | - | - | - |
| G*-10/G* | 3.63(3.7) | 3.73(3.8) | 4.90(5) | 3.53(3.6) | 3.43(3.5) | 3.82 (3.9) | - | - | - |
| G*A[3]) | 13.82 (14.1) | 53.94 (55) | 24.71 (25.2) | - | - | - | - | - | - |
| Tan$\delta$ 30[4]) | 0.54 | 0.59 | 0.69 | 0.58 | 1.3 | 1.0 | 0.3 | - | 0.34 |
| Tan$\delta$ -10[5]) | 0.83 | 0.82 | 0.98 | 0.89 | 1.3 | 1.1 | - | - | - |
| CMV[6]) | +5% | -85% | +40% | - | - | - | - | - | - |

a) Example

b) Comparative Example

1) G* Pa to be x $10^5$, (Kg/cm$^2$) measured at 30°C

2) G*Pa to be x $10^5$, (Kg/cm$^2$) measured at -10°C

3) G*Pa to be x $10^5$, (Kg/cm$^2$) measured at -10°C where the rubber sample had been aged for 16 hours at -10 °C

4) Tan$\delta$ measured at 30 °C

5) Tan$\delta$ measured at -10 °C

6) Rate of change of the Mooney viscosity before and after an aging for 168 hours at 100 °C

## Claims

1.  A rubber composition having a complex shear elastic modulus of 9.81 X $10^4$-19.61 X $10^5$ Pa (1-20 kg/cm$^2$) and a Tan$\delta$ of 0.40-1.5 at 30°C under a frequency of 0.5 Hz ± 50 % comprising:

    a) x parts by weight of a filler for use in rubber;
    b) y parts by weight of carbon black having an iodine adsorption of 20-120 mg/g; and
    c) 100 parts by weight of unvulcanised polyisobutylene;

wherein the value x and y satisfy the relation that:

x ≤ 450, y ≤ 150, and

x + y ≥ 100,

wherein said polyisobutylene has a Flory viscosity average molecular weight not less than 300,000 and wherein the total rubber component consists of polyisobutylene.

2. A rubber composition according to claim 1 wherein said polyisobutylene has a molecular weight not less than 1,000,000.

3. A rubber composition as claimed in any one of claims 1 to 2, having a complex shear elastic modulus of 2.94 X $10^5$-11.77 X $10^5$ Pa (3-12 kg/cm$^2$).

4. The use of a rubber composition in any one of claims 1 to 3 in the manufacture of a damper.

5. The use as claimed in claim 4, wherein the damper is for use in structures, public works, vehicles, oversize powered machines, sound products, meters, or vehicle components.

6. A damper comprising a rubber composition as claimed in any one of claims 1 to 3.

**Patentansprüche**

1. Kautschukzusammensetzung mit einem komplexen Scherelastizitätsmodul von 9,81 • $10^4$ bis 19,61 • $10^5$Pa (1 bis 20 kg/cm$^2$) und einem tan δ-Wert von 0,40 bis 1,5 bei 30°C unter einer Frequenz von 0,5 Hz ±50%, umfassend:

   a) x Gewichtsteile eines Füllstoffs zur Verwendung im Kautschuk;
   b) y Gewichtsteile Ruß mit einer Iodadsorptionszahl von 20 bis 120 mg/g; und
   c) 100 Gewichtsteile unvulkanisiertes Polyisobutylen;

   wobei die Werte x und y die Relation erfüllen, daß gilt:
   x ≤ 450,
   y ≤ 150 und
   x + y ≥ 100,
   wobei das Polyisobutylen ein Viskositätsmittel des Molekulargewichts nach Flory von wenigstens 300.000 hat, und wobei der gesamte Kautschukbestandteil aus Polyisobutylen besteht.

2. Kautschukzusammensetzung nach Anspruch 1, wobei das Polyisobutylen ein Molekulargewicht von wenigstens 1.000.000 hat.

3. Kautschukzusammensetzung nach einem der Ansprüche 1 und 2 mit einem komplexen elastischen Schubmodul von 2,94 • $10^5$ bis 11,77 • $10^5$ Pa (3 bis 12 kg/cm$^2$).

4. Verwendung einer Kautschukzusammensetzung nach einem der Ansprüche 1 bis 3 zur Herstellung eines Dämpfers.

5. Verwendung nach Anspruch 4, wobei der Dämpfer zur Verwendung bei Bauten, öffentlichen Gebäuden, Fahrzeugen, übergroßen Maschinen, Produkten zur Tonerzeugung Meßgeräten oder Fahrzeugbestandteilen ist.

6. Dämpfer, umfassend eine Kautschukzusammensetzung nach einem der Ansprüche 1 bis 3.

**Revendications**

1. Composition de caoutchouc ayant un module complexe d'élasticité au cisaillement compris entre 9,81.$10^4$ et 19,61.$10^5$ Pa (1 à 20 kg/cm$^2$) et tgδ compris entre 0,40 et 1,5 à 30 °C à une fréquence de 0,5 Hz ± 50 %, comprenant :

   a) x parties en poids d'une charge destinée à être utilisée dans du caoutchouc,

b) y parties en poids de noir de carbone ayant un indice d'absorption d'iode de 20 à 120 mg/g, et

c) 100 parties an poids de polyisobutylène non vulcanisé,

les valeurs x et y correspondant aux relations suivantes :

$x \leq 450$, $y \leq 150$ et $x + y \geq 100$

le polyisobutylène ayant une masse moléculaire moyenne déterminée par la viscosité Flory qui n'est pas inférieure à 300 000, et la totalité de l'ingrédient de caoutchouc étant constituée de polyisobutylène.

2. Composition de caoutchouc selon la revendication 1, dans laquelle le polyisobutylène a une masse moléculaire qui n'est pas inférieure à 1 000 000.

3. Composition de caoutchouc selon l'une quelconque des revendications 1 à 2, ayant un module complexe d'élasticité de cisaillement compris entre $2,94.10^5$ et $11,77.10^5$ Pa (3 à 12 kg/cm$^2$).

4. Application d'une composition de caoutchouc selon l'une quelconque des revendications 1 à 3 à la fabrication d'un amortisseur.

5. Application selon la revendication 4, dans laquelle l'amortisseur est destiné à être utilisé dans des structures, des ouvrages publics, des véhicules, des machines de très grandes dimensions, des produits acoustiques, des appareils de mesure ou des éléments de véhicules.

6. Amortisseur comprenant une composition de caoutchouc selon l'une quelconque des revendications 1 à 3.

Fig. 1